Europäisches Patentamt

European Patent Office

Office européen des brevets

(19)

(11) **EP 0 810 800 A2**

(12) **EUROPÄISCHE PATENTANMELDUNG**

(43) Veröffentlichungstag:
03.12.1997 Patentblatt 1997/49

(51) Int. Cl.$^6$: **H04Q 3/58**

(21) Anmeldenummer: 97107947.0

(22) Anmeldetag: 15.05.1997

(84) Benannte Vertragsstaaten:
AT BE CH DE DK ES FI FR GB GR IT LI NL SE

(30) Priorität: 28.05.1996 DE 19621402
15.07.1996 DE 19628458

(71) Anmelder:
SIEMENS AKTIENGESELLSCHAFT
80333 München (DE)

(72) Erfinder: Löbig, Norbert, Dr.
64291 Darmstadt (DE)

(54) **Verfahren zur Anbindung von Teilnehmern an die Kommunikationssysteme einer Mehrzahl von Netzbetreibern**

(57) Zukünftig kann der einzelne Telefonkunde eine Mehrzahl von Netzbetreibern und Diensteanbietern auswählen. Damit besteht aber das Problem, wie der einzelne Teilnehmer an die Kommunikationssysteme einer Mehrzahl von Netzbetreibern angeschlossen werden soll. Das erfindungsgemäße Verfahren schafft hier Abhilfe, indem Signalisierungsnachrichten und Sprachinformationen eines Teilnehmers transparent durch die wenigstens eine Ortsvermittlungsstelle des physikalisch zugeordneten Netzbetreibers zu dem gewünschten Netzbetreiber durchgereicht werden.

FIG 2

EP 0 810 800 A2

## Beschreibung

Die Erfindung betrifft ein Verfahren gemäß dem Oberbegriff des Patentanspruchs 1.

Gegenwärtig haben öffentliche Netzbetreiber quasi eine Monopolstellung insbesondere auf dem Gebiet der Telefonie, die sie mit der Deregulierung der Telekommunikationsmärkte verlieren. Zukünftig soll freier Wettbewerb in der Weise angestrebt werden, daß der einzelne Telefonkunde eine Mehrzahl von Netzbetreibern und Diensteanbietern auswählen kann. Somit kann jeder Telefonkunde den für sich attraktivsten Anbieter hinsichtlich Diensteumfang, Gebührenstruktur etc. auswählen. Im Hinblik auf die Telekommunikationsinfrastruktur existieren damit mehrere öffentliche Netze nebeneinander. Dieses sind die historisch gewachsenen Netze der klassischen Netzbetreiber und die neuen Netze der alternativen (neu hinzugekommenen) Netzbetreiber. Diese konkurrierenden öffentlichen Netze bestehen jeweils aus Fern- und Ortsvermittlungsstellen und verbindenden Übertragungswegen. Hierbei können den Ortsvermittlungsstellen Teilnehmeranschlußkonzentratoren vorgelagert sein, welche den Zugang zur Ortsvermittlungsstelle optimieren. Ferner kann die Orts- und Fernvermittlungsstellenfunktion auch in einer kombinierten Vermittlungsstelle implementiert sein. Zwischen den verschiedenen öffentlichen Netzen sind Netzübergänge vorhanden, so daß die Erreichbarkeit der Teilnehmer eines jeden Netzes für jeden beliebigen weiteren Teilnehmer gesichert ist.

Die oben genannten Vermittlungsstellen, insbesondere die Ortsvermittlungsstellen, bestehen aus peripheren Einrichtungen, die als Anschlußeinrichtungen für Teilnehmer oder Leitungen ausgebildet sind. Weiterhin sind (aus Zuverlässigkeitsgründen mindestens gedoppelte) zentrale Einrichtungen vorgesehen, sowie Einrichtungen des Koppelfeldes, Signalisierungseinrichtungen (#7), Nachrichtenverteiler, Rechnerplattform, Hintergrundspeicher, Bedieneinrichtungen sowie die Teilnehmeranschlußkonzentratoren. Alle diese Einrichtungen sind in der Regel softwaregesteuerte Ein- oder Mehrprozessorsysteme.

Gegenwärtig ist die überwiegende Mehrzahl der Teilnehmer noch über Teilnehmerschnittstellen an Ortsvermittlungsstellen oder den diesen zugehörigen vorgelagerten Teilnehmeranschlußkonzentratoren des klassischen Netzbetreibers angeschlossen. In letzterem Fall gilt es zu beachten, daß die Schnittstelle zwischen Teilnehmeranschlußkonzentrator und Ortsvermittlungsstelle keine (z.B. von ITU) genormte, sonderen eine herstellerspezifische Schnittstelle ist. Schließlich sind die Teilnehmeranschlußleitungen in aufwendiger Weise (z. B. unterirdisch) an die Hauptverteiler der Ortsvermittlungsstellen des klassischen Netzbetreibers herangeführt.

Für einen über einen Teilnehmeranschlußkonzentrator angeschlossenen Teilnehmer, der Zugang zu einem alternativen Netzbetreiber wünscht, wird beim Stand der Technik die Teilnehmeranschlußleitung am Hauptverteiler der Ortsvermittlungsstelle des bisherigen öffentlichen Netzbetreibers abgeklemmt und der Ortsvermittlungsstelle des gewünschten alternativen Netzbetreibers zugeführt. Dabei ergibt sich jedoch das Problem, daß eine derartige Vorgehensweise lediglich für die der Schnittstelle zugehörige Teilnehmergesamtheit durchgeführt werden kann, ein entsprechendes Vorgehen für einzelne Teilnehmer ist hingegen nicht möglich. Dies hat seinen Grund darin, daß der Installationsaufwand enorm ist.

Der Erfindung liegt die Aufgabe zugrunde, einen Weg aufzuzeigen, wie für die über herstellerspezifische Schnittstellen an die Ortsvermittlungsstelle angeschlossenen Teilnehmer ein inviduell freier Zugang zu Ortsvermittlungsstellen aller alternativen Netzbetreiber technisch flexibel und ohne großen Installationsaufwand realisiert werden kann.

Die Erfindung wird ausgehend vom Oberbegriff des Patentanspruchs 1 durch dessen kennzeichnende Merkmale gelöst.

Vorteilhaft für die Erfindung ist, daß Signalisierungsnachrichten und Sprachinformationen des vermittlungstechnisch dem weiteren (konkurrierenden) Netzbetreiber zugeordneten Teilnehmers transparent durch die wenigstens eine Ortsvermittlungsstelle des physikalisch zugeordneten Netzbetreibers durchgereicht werden. Damit ist insbesondere der Vorteil verbunden, daß keine teueren und starren Zugangswege im Bereich der Teilnehmeranschlußkonzentratoren auftreten. Weiterhin ist damit der Vorteil verbunden, daß keine überdimensionierten Zugangswege von den Teilnehmerkonzentratoren an die Ortsvermittlungsstellen der alternativen Netzbetreiber geführt werden müssen. Darüberhinaus kann der unvorhersehbaren Marktgegebenheiten unterworfene, schwankende Zugangsbedarf zu den Ortsvermittlungsstellen der konkurrierenden Netzbetreiber auf administrativem Wege flexibel angepaßt werden.

Vorteilhafte Ausgestaltungen der Erfindung sind in den Unteransprüchen angegeben:

Gemäß Anspruch 2 ist vorgesehen, daß in der Ortsvermittlungsstelle des einen Netzbetreibers die den Signalisierungsnachrichten mitgegebene physikalische Adresse daraufhin untersucht wird, ob der Teilnehmer vermittlungstechnisch einem der weiteren Netzbetreiber zugeordnet ist. Damit ist der Vorteil verbunden, daß unmittelbar, ohne aufwendige interne Analyse, zu der Ortsvernittlungsstelle dieses weiteren Netzbetreibers verzweigt werden kann.

Gemäß Anspruch 3 ist vorgesehen, daß in einer Tabelle der Ortsvermittlungsstelle des einen Netzbetreibers eine Umsetzung zwischen der physikalischen, auf der zwischen Teilnehmer und Ortsvermittlungsstelle des physikalisch zugeordneten Netzbetreibers gültigen Adresse und einer Adresse erfolgt, unter der die Signalisierungsnachrichten der Schnittstelle übergeben werden, über die die Ortsvermittlungsstelle des wenigstens einen der weiteren Netzbetreiber erreichbar ist. Damit ist der Vorteil verbunden, daß im Teilnehmeranschlußkonzentrator und den Ortsvermittlungsstellen sich unterscheidende Adressierungsverfahren unabhängig voneinander existieren können, welche koordiniert und flexibel aneinander angepaßt werden können.

Gemäß Anspruch 4 ist vorgesehen, daß von einem bzw. an einen Teilnehmer gesendete Paketdaten über die periphere Einrichtung geleitet werden, die einen Paketdatenkanal terminiert, welcher die Paketdaten des Teilnehmers auf der Schnittstelle zwischen der Ortsvermittlungsstelle des physikalisch zugeordneten Netzbetreibers und der Ortsvermittlungsstelle mit der vermittlungstechnischen Funktion transportiert. Damit weist das erfindungsgemäße Verfahren auch die für ISDN Teilnehmer mit Paketdatenberechtigung erforderliche Unterstützung auf.

Gemäß Anspruch 5 ist vorgesehen, daß im Falle von Ausfall-/Wiederverfügbarkeitssituationen im Teilnehmeranschlußkonzentrator oder auf der teilnehmerseitigen Schnittstelle die Ortsvermittlungsstelle des physikalisch zugeordneten Netzbetreibers für alle betroffenen Teilnehmer auf allen für diese Teilnehmermenge relevanten Schnittstellen portspezifische Ausfall-/Verfügbarkeitsmeldungen an die zugehörigen Ortsvermittlungsstellen der weiteren Netzbetreiber generiert und daß im Falle von Ausfall-/Wiederverfügbarkeitssituationen auf der betreiberseitigen Schnittstelle die Ortsvermittlungsstelle für alle betroffenen Teilnehmer portspezifische Ausfall-/Verfügbarkeitsindikatoren führt, welche im Rahmen des Verbindungsaufbaus vermittlungstechnisch ausgewertet werden. Damit ist der Vorteil der Vermeidung vermittlungstechnischer Blindlast verbunden.

Gemäß Anspruch 6 ist vorgesehen, daß die Mehrzahl von Teilnehmern über eine Mehrzahl von Teilnehmeranschlußkonzentratoren und/oder über eine Mehrzahl von Schnittstellen die Ortsvermittlungsstelle des physikalisch zugeordneten Netzbetreibers erreicht und bzgl. Signalisierungsinformation, Sprachinformation und Paketdaten einer oder mehreren Schnittstellen der Ortsvermittlungsstelle des weiteren Netzbetreibers zugeordnet ist. Damit ist der Vorteil verbunden, daß die vermittlungstechnisch dem weiteren Netzbetreiber zugeordneten Teilnehmer in der Ortsvermittlungsstelle konzentriert werden können.

Gemäß Anspruch 7 ist vorgesehen, daß an der Ortsvermittlungsstelle des physikalisch zugeordneten Netzbetreibers mehrere Schnittstellen zu einer Mehrzahl von Ortsvermittlungsstellen unterschiedlicher, weiterer Netzbetreiber existieren. Damit ist der Vorteil verbunden, daß eine beliebige Anzahl weiterer Netzbetreiber in gleicher Weise und zur gleichen Zeit über die Ortsvermittlungsstelle des physikalisch zugeordneten Netzbetreibers angebunden werden können.

Gemäß Anspruch 8 ist vorgesehen, daß Signalisierung und/oder Paketdaten der Mehrzahl der Teilnehmer bereits im Teilnehmeranschlußkonzentrator auf feste, nur für die vermittlungstechnisch dem weiteren Netzbetreiber zugeordneten Teilnehmer reservierte Signalisierungs- und/oder Paketdatenkanäle geleitet werden, die via internem Nachrichtenverteilsystem der Ortsvermittlungsstelle oder via Sprachkanaldurchschaltung durch die Ortsvermittlungsstelle als Gesamtheit auf einen Signalisierungs- und/oder Paketdatenkanal der betreiberseitigen Schnittstelle geschaltet werden. Damit ist der Vorteil verbunden, daß die Auswertung der Adressen in der Ortsvermittlungsstelle entfällt.

Gemäß Anspruch 9 ist vorgesehen, daß die Ortsvermittlungsstelle eine Verkehrsmessung im Sinne einer Zählung von Anzahl und/oder Dauer von Sprachkanaldurchschaltungen und/oder Anzahl und Länge übertragener Paketdaten und/oder Signalisierungsnachrichten zwischen der Mehrzahl der Teilnehmer und dem weiteren Netzbetreiber als Basis zur Kostenabrechnung zwischen den Netzbetreibern steuert. Damit kann der Netzbetreiber den weiteren Netzbetreibern die Nutzung der Ressourcen der Ortsvermittlungsstelle belegen und angemessenes Entgelt einfordern.

Gemäß Anspruch 10 ist vorgesehen, daß die Tabelle der Ortsvermittlungsstelle dahingehend durch Bedienereingriff administriert werden kann, daß ein Teilnehmer wechselweise vermittlungstechnisch dem Netzbetreiber oder einem der weiteren Netzbetreiber zugeordnet werden kann, wobei in letzterem Falle die Schnittstelle, sowie die zugeordneten Signalisierungs- und/oder Paketdatenkanäle und die auf der Schnittstelle gültige Adresse frei zugeordnet werden können. Damit ist der Vorteil verbunden, daß der Teilnehmer durch reine Bedienaktionen und damit bei Bedarf auch kurzfristig den für ihn vermittlungstechnisch zuständigen Netzbetreiber wechseln kann. Umverdrahtungen oder sonstiger Installationsaufwand sind damit nicht erforderlich.

Gemäß Anspruch 11 ist vorgesehen, daß die Mehrzahl der Teilnehmer (TLN) auch Teilnehmer enthält, die über genormte V5-Schnittstellen an die Ortsvermittlungsstelle des physikalisch zugeordneten Netzbetreibers angeschlossen sind und daß deren Signalisierungs- und Paketdateninformation in geeigneter Weise in der voranstehend genannten Ortsvermittlungsstelle umgesetzt wird. Damit ist der Vorteil verbunden, daß auch in neuer Technik gemäß V5-Standard an die Ortsvermittlungsstelle angebundene Teilnehmer den für sie vermittlungstechnisch Zuständigen Netzbetreiber frei wählen können.

Die Erfindung wird im folgenden anhand eines Ausführungsbeispiels näher erläutert.

Es zeigen:

Figur 1    die typische Systemarchitektur eines Kommunikationssystems wie z.B einer Ortsvermittlungsstelle,

Figur 2    eine Konfiguration, auf der das erfindungsgemäße Verfahren zum Ablauf gelangt,

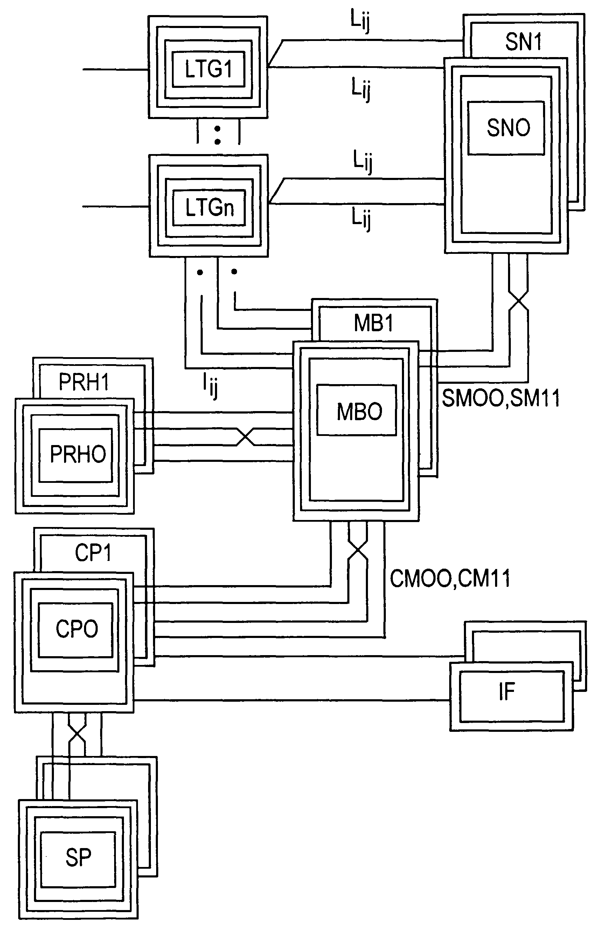

Fig. 1 zeigt die typische Systemarchitektur eines Kommunikationssystems mit ungedoppelten peripheren Einrichtungen LTG$_1$ ...LTG$_n$. Sie sind ausgangssei-

tig mit Teilnehmern oder Teilnehmeranschlußkoknzentratoren und/oder -netzwerken bzw. weiteren Kommunikationssystemen verbunden;die von diesen ausgehenden Informationen werden von den peripheren Einrichtungen $LTG_1...LTG_n$ empfangen und über Verbindungen Lij dem redundant ausgebildeten Koppelfeld SN0, SN1 zugeführt. Weiterhin sind die peripheren Einrichtungen $LTG_1....LTG_n$ über weitere Verbindungen lij mit den redundant ausgebildeten Nachrichtenverteilereinheiten MB0, MB1 verbunden, die ihrerseits über weitere Verbindungen lij zum einen mit den redundant ausgebildeten Einrichtungen zur Behandlung zentraler Protokollabschlußaufgaben PRH (z.B. zentraler Zeichenkanal für No.7 Signalisierung, Zugang zu Paketnetzen) und zum anderen mit dem Koppelfeld SN0, SN1 sowie mit der ebenfalls redundant ausgebildeten zentralen Steuereinrichtung CP0, CP1 verbunden sind. Letztere ist an einen gedoppelten Massenspeicher SP angeschlossen. Im weiteren sind an die zentrale Steuereinrichtung CP0, CP1 Interface-Einheiten IF zur Anschaltung von Bedienungselementen bzw. zur Alarmierung des Wartungspersonals vorgesehen. Das Koppelfeld SN0, SN1, die Nachrichtenverteilereinheiten MB0, MB1, die Einrichtungen zur Behandlung zentraler Protokollabschlußaufgaben PRH0, PRH1, die zentrale Steuereinrichtung CP0, CP1 sowie die Massenspeicher SP und die Interface-Einheiten IF sind somit im Kommunikationssystem jeweils gedoppelt vorgesehen. Die peripheren Einrichtungen $LTG_1...LTG_n$ hingegen sind bei vorliegendem Ausführungsbeispiel ungedoppelt ausgeführt.

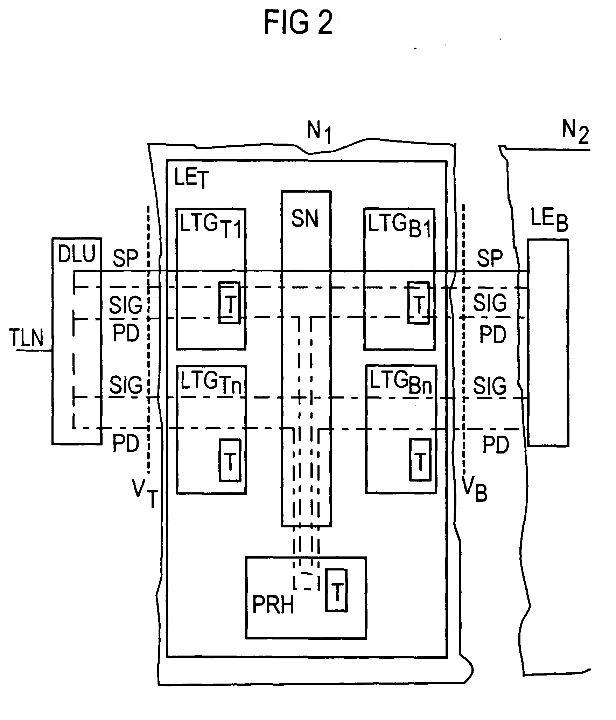

In Fig. 2 ist eine Konfiguration aufgezeigt, auf der das erfindungsgemäße Verfahren zum Ablauf gelangt. Hier ist eine Ortsvermittlungsstelle $LE_T$ eines ersten Netzbetreibers N1 offenbart. Der Übersichtlichkeit halber ist lediglich diese eine Ortsvermittlungsstelle aufgezeigt, obwohl das gesamte Netz, für das der Netzbetreiber N1 verantwortlich ist, eine Vielzahl derartiger Ortsvermittlungsstellen sowie weiterer Vermittlungsstellen, wie z.B. Fernvermittlungsstellen aufweist. Der Ortsvermittlungsstelle $LE_T$ werden die Teilnehmer TLN physikalisch zugeordnet, indem diese über einen Teilnehmeranschlußkonzentrator DLU an die Ortsvermittlungsstelle $LE_T$ herangeführt werden. Der Teilnehmeranschlußkonzentrator DLU und die Ortsvermittlungsstelle $LE_T$ sind weiterhin über eine herstellerspezifische (proprietäre) Schnittstelle $V_T$ verbunden. Die Schnittstelle des Teilnehmeranschlußkonzentrators zur Ortsvermittlungsstelle ist eine konzentrierende Schnittstelle, welche durch jeweils 2 im Load Sharing Modus betriebene Signalisierungskanäle (CCS Kanäle) und 2 ebenfalls im Load Sharing betriebene D-Kanal-Paketdatenkanäle charakterisiert ist. Leitungsvermittelte Verbindungen und Paketdatenverbindungen können bei A-seitiger Belegung zufällig und bei B-seitiger Belegung nach Lastgesichtspunkten wahlweise über 2 periphere Einrichtungen geführt sein.

Weiterhin ist Fig. 2 ein zweiter Netzbetreiber N2 entnehmbar, der erfindungsgemäß über eine weitere Teilnehmeranschlußkonzentrator Schnittstelle $V_B$ an die Ortsvermittlungsstelle $LE_T$ angeschlossen ist. Diese Schnittstelle ist ebenfalls eine herstellerspezifische Schnittstelle und soll in vorliegendem Ausführungsbeispiel bzgl. ihrer Definition identisch mit der teilnehmerseitigen Schnittstelle $V_T$ sein. Weitere Netzbetreiber, die gemäß Fig. 2 nicht aufgezeigt sind, können über weitere derart ausgebildete Schnittstellen angeschlossen werden. Letztendlich sind also jene Teilnehmer TLN, welche von dem Netzbetreiber N2 bedient werden wollen, physikalisch dem Netzbetreiber N1 und vermittlungstechnisch dem Netzbetreiber N2 zugeordnet.

Im folgenden sei davon ausgegangen, daß einer der Teilnehmer TLN mit einem anderen Teilnehmer kommunizieren möchte. Der Teilnehmer TLN ist direkt über die zuständige teilnehmerseitige Schnittstelle $V_T$ an die Ortsvermittlungsstelle $LE_T$ des Netzbetreibers N1 pyhysikalisch angebunden. Da er in vermittlungstechnischer Hinsicht dem Netzbetreiber N2 zugeordnet ist, stellt dieser die notwendigen vermittlungstechnischen Funktionen und Dienste (features) in der betreffenden Ortsvermittlungsstelle $LE_B$ bereit. Der besseren Übersichtlichkeit halber seien die peripheren Einrichtungen $LTG_1...LTG_n$ als teilnehmerseitige periphere Einrichtungen $LTG_{T1}...LTG_{Tn}$ und als betreiberseitige periphere Einrichtungen $LTG_{B1}...LTG_{Bn}$ bezeichnet.

Die Signalisierungsnachrichten SIG des Teilnehmers TLN werden in einer der peripheren Einrichtungen mit Zugang zu dem Teilnehmeranschlußkonzentrator DLU vorverarbeitet. Dies soll beispielsweise die periphere Einrichtung $LTG_{T1}$ sein. Im weiteren treffen die Signalisierungsnachrichten SIG über einen der beiden Signalisierungskanäle (CCS Kanäle) in der Ortsvermittlungsstelle $LE_T$ ein. Jede der Signalisierungsnachrichten SIG ist mit einer Portnummer EQN des Teilnehmers TLN versehen. Dabei handelt es sich um die physikalische Adresse, unter der dieser Teilnehmer TLN im Teilnehmeranschlußkonzentrator (DLU-Shelf-Modul-Port) angeschlossen ist. An Hand dieser Portnummer EQN wird die funktionale (vermittlungstechnische) Zugehörigkeit des Teilnehmers TLN zu der Ortsvermittlungsstelle $LE_B$ erkannt.

In der Ortsvermittlungsstelle $LE_T$ wird ein Tabelle T geführt. Mit den hier abgespeicherten Daten wird die Portnummer EQN auf der Schnittstelle $V_T$ des Teilnehmeranschlußkonzentrators DLU des Teilnehmers TLN in eine Portnummer EQN auf der $V_B$ Schnittstelle sowie die Nummer der $V_B$ Schnittstelle umgesetzt. Weiterhin wird nach einem bestimmten Kriterium ein Signalisierungskanal für die Signalisierung des Teilnehmers TLN zur $V_B$ Schnittstelle festgelegt. Dabei können als Kriterium beispielsweise - wie eingangs beschrieben - Zufalls- und/oder Lastgesichtspunkte verwendet werden. Die Portnummer EQN der $V_B$ Schnittstelle besitzt im Gegensatz zu der der $V_T$ Schnittstelle keinen physikalischen Bezug, sie ist eine virtuelle Portnummer, die dem $LE_B$ gestattet, die Signalisierung und Paketdaten des Teilnehmers TLN zu behandeln wie die eines an einem real existierenden Teilnehmneranschlußkonzenztrator DLU des $LE_B$ direkt angeschlossenen Teilnehmers.

Die vom Teilnehmer TLN ausgehende Signalisierungsnachricht SIG wird sodann über das interne Nachrichtenverteilsystem MB der Ortsvermittlungsstelle $LE_T$ an die diesen Signalisierungskanal der $V_B$ Schnittstelle terminierende periphere Einrichtung weitergeleitet. In dieser peripheren Einrichtung wird die Signalisierungsnachricht SIG mit der für Teilnehmer TLN auf der $V_B$ Schnittstelle gültigen Portnummer EQN in Richtung der Ortsvermittlungsstelle $LE_B$ ausgegeben.

Die von der Ortsvermittlungsstelle $LE_B$ zum Teilnehmer TLN ausgehenden Signalisierungsnachrichten SIG werden in einer der peripheren Einrichtungen der Ortsvermittlungsstelle $LE_T$ -beispielsweise der peripheren Einrichtungen $LTG_{B1}$ - an ihrer Portnummer EQN der $V_B$ Schnittstelle erkannt. Vermittels der bereits genannten, administrativ im der Ortsvermittlungsstelle $LE_T$ zu pflegenden Tabelle T wird die virtuelle Portnummer EQN des Teilnehmers TLN auf der $V_B$ Schnittstelle in eine physikalische Portnummer EQN der $V_T$ Schnittstelle sowie die Nummer der $V_T$ Schnittstelle umgesetzt. Auch hier wird nach Maßgabe eines bestimmten Kriteriums ein Signalisierungskanal für die Signalisierung des Teilnehmers TLN der teilnehmerseitigen Schnittstelle $V_T$ festgelegt. Als Kriterium werden auch hier Zufall oder Lastgesichtspunkte verwendet.

Die von der Ortsvermittlungsstelle $LE_B$ erhaltene Signalisierungsnachricht SIG wird sodann über das interne Nachrichtenverteilsystem MB der Ortsvermittlungsstelle $LE_T$ an die diesen Signalisierungskanal der $V_T$ Schnittstelle terminierende periphere Einrichtung weitergeleitet. In dieser peripheren Einrichtung wird dann die Signalisierungsnachricht mit der für den Teilnehmer TLN auf der teilnehmerseitigen Schnittstelle $V_T$ gültigen physikalischen Portnummer EQN in Richtung Teilnehmeranschlußkonzentrator DLU weitergeleitet.

Je nach Definition der teilnehmerspezifischen Schnittstelle werden die für eine Belegung des Teilnehmers TLN bestimmten Signalisierungskanäle (CCS-Kanäle) auf den Schnittstellen $V_T$ und $V_B$ für alle Signalisierungsnachrichten SIG und beide Übertragungsrichtungen einer Verbindung benutzt. Damit ist es dann lediglich notwendig, bei jedem Verbindungsaufbau die zufällige oder lastabhängige Auswahl des Signalisierungskanals vorzunehmen. Im einfachsten Fall kann diese Zuordnung zum Teilnehmer TLN fest per Defaultzuweisung erfolgen. Liegt dieser einfachste Fall nicht vor, so müssen die peripheren Einrichtungen LTG der Ortsvermittlungsstelle $LE_T$ die Signalisierungsnachrichten SIG zwischen dem Teilnehmer TLN und der Ortsvermittlungsstelle $LE_B$ auf Verbindungsaufbau (SEIZURE) und Verbindungsabbau (RELEASE) überprüfen, um den Triggerpunkt für eine verbindungsbezogene Neuzuordnung von TLN-Signalisierungsnachrichten und Signalisierungskanal (CCS-Kanal) zu finden.

In der Praxis sind auch temporäre Durchschaltungen von Sprachkanälen SP durch die Ortsvermittlungsstelle $LE_T$ erforderlich. Zu diesem Zweck muß in der Ortsvermittlungsstelle $LE_T$ die Zuordnung eines Sprachkanals SP zum Teilnehmer TLN gesteuert werden. Ein beliebiger freier Sprachkanal der Schnittstelle $V_T$ wird dem Teilnehmer TLN lediglich für die Dauer der Verbindung zugeordnet. Dazu erfolgt im Teilnehmeranschlußkonzentrator DLU eine temporäre Durchschaltung des Teilnehmers auf den zugeordneten Sprachkanal SP der Schnittstelle $V_T$. Protokollmäßig separate Durchschalteaufträge der Ortsvermittlungsstelle $LE_B$ an den Teilnehmeranschlußkonzentrator DLU, ähnlich dem BCC Protokoll der V5.2-Schnittstelle sind jedoch nicht verfügbar, so daß die Ortsvermittlungsstelle $LE_T$ die Triggerpunkte für die Durchschaltung eines Sprachkanales SP durch die Ortsvermittlungsstelle $LE_T$ und die Freigabe des Sprachkanals SP im Rahmen des Verbindungsabbaus aus vermittlungstechnischen Nachrichten zwischen der Ortsvermittlungsstelle $LE_B$ und dem Teilnehmeranschlußkonzentrator DLU ableiten muß. Dies ist jedoch in einfacher Weise möglich:

Wird von der Ortsvermittlungsstelle $LE_B$ die Zuordnung des Teilnehmers TLN zu einem Sprachkanal SP der Schnittstelle $V_B$ zwischen den Ortsvermittlungsstellen $LE_T$, $LE_B$ angefordert, so wird dies von der Ortsvermittlungsstelle $LE_B$ dem real an der $V_B$ Schnittstelle nicht existierenden Teilnehmeranschlußkonzentrator DLU, also dem $LE_T$, in Form einer vermittlungstechnischen, auf die Schnittstelle $V_B$ bezogenen Nachricht mitgeteilt ('Time Slot Assign'). Hierauf nimmt die Ortsvermittlungsstelle $LE_T$ eine Durchschaltung des geforderten Sprachkanales der Schnittstelle $V_B$ auf einen freien Sprachkanal der Schnittstelle $V_T$ vor. Weiterhin wird von der Ortsvermittlungsstelle $LE_T$ diese von $LE_B$ empfangene vermittlungstechnische, auf die Schnittstelle $V_B$ bezogenen Nachricht auf die Schnittstelle $V_T$ umgesetzt. Dabei ist wiederum der Zugriff auf die Tabelle T zur Umsetzung der Portnummer EQN in der Ortsvermittlungsstelle $LE_T$ erforderlich. Sodann wird diese umgesetzte Nachricht an den realen Teilnehmeranschlußkonzentrator DLU weitergereicht und mit Erhalt der Ausführungsquittung von demselben der Auftrag an die Ortsvermittlungsstelle $LE_B$ als ausgeführt quittiert.

Im Mißerfolgsfalle erfolgt die Rückweisung des Durchschalteauftrags der Ortsvermittlungsstelle $LE_B$ oder die Nichtquittierung. Fordert die Ortsvermittlungsstelle $LE_B$ im Rahmen des Verbindungsabbaus die Freigabe des Sprachkanals des Teilnehmers TLN an der Schnittstelle $V_B$ an, so teilt die Ortsvermittlungsstelle $LE_B$ dem real nicht existierenden Teilnehmeranschlußkonzentrator DLU, also dem $LE_T$, dies ebenfalls in Form einer vermittlungstechnischen, auf die Schnittstelle $V_B$ bezogenen Nachricht mit ('Time Slot Release'). Hierauf hebt die Ortsvermittlungsstelle $LE_T$ die Durchschaltung des bisher zugeordneten Sprachkanales der Schnittstelle $V_B$ auf einen Sprachkanal der Schnittstelle $V_T$ auf und setzt die vermittlungstechnische, hinsichtlich EQN und Sprachkanal auf die Schnittstelle $V_B$ bezogene Nachricht auf die Schnittstelle $V_T$ um. Dabei ist wiederum der Zugriff auf die Tabelle T zur Umsetzung der Portnummer EQN in der Ortsvermittlungsstelle $LE_T$ erforderlich. Sodann wird diese umgesetzte Nachricht an den realen Teilnehmeranschlußkonzentrator DLU weitergereicht und mit Erhalt der Ausführungsquittung von demselben der Auftrag an die Ortsvermittlungsstelle $LE_B$ als ausgeführt quittiert.

Im folgenden wird näher auf die Behandlung von D-Kanal-Paketdaten eingegangen, die von einem der Teilnehmer TLN zur Ortsvermittlungsstelle $LE_B$ gesendet werden. Natürlich gilt dies nur für die Teilnehmer TLN, denen ISDN Funktion mit Paketdatenberechtigung zugewiesen worden ist:

Die Paketdaten einer Paketdatenverbindung des Teilnehmers TLN werden in einem von 2 zur Verfügung stehenden Paketdatenkanälen der Schnittstelle $V_T$ transparent über eine der peripheren Einrichtungen LTG zu einem zentralen Protocol Handler PRH der Ortsvermittlungsstelle $LE_T$ übertragen, welcher den Paketnetzzugang realisiert. Die Paketdaten einer Paketdatenverbindung des Teilnehmers TLN werden an der im Nachrichtenheader kodierten Portnummer EQN des Teilnehmers TLN auf der Schnittstelle $V_T$ erkannt. Vermittels der administrativ in der Ortsvermittlungsstelle $LE_T$ zu pflegenden Tabelle T wird die im Nachrichtenheader kodierte physikalische Portnummer EQN des Teilnehmers TLN auf der Schnittstelle $V_T$ auf die kodierte, virtuelle Portnummer EQN des Teilnehmers TLN auf der Schnittstelle $V_B$ umgesetzt. Die derart umgesetzte Nachricht wird nun auf den Port des zentralen Protocol Handlers PRH ausgegeben, der die Weiterleitung der Paketdatennachricht auf einem der beiden Paketdatenkanäle der Schnittstelle $V_B$ in Richtung der Ortsvermittlungsstelle $LE_B$ gestattet. Dieser Paketdatenkanal ist für alle Nachrichten einer Paketdatenverbindung fest eingestellt. Die vom Teilnehmer TLN erhaltenen Paketdaten werden also abweichend von der üblichen Behandlung nicht in Richtung Paketnetz, sondern auf einen Paketdatenkanal der Schnittstelle $V_B$ geleitet. Hierzu wird ein sogenanntes frame switching in der Ortsvermittlungsstelle $LE_T$ durchgeführt.

In analoger Weise werden die von der Ortsvermittlungsstelle $LE_B$ an die Ortsvermittlungsstelle $LE_T$ gesendeten Paketdaten einer Paketdatenverbindung des Teilnehmers TLN in einem von 2 zur Verfügung stehenden Paketdatenkanälen der Schnittstelle $V_B$ transparent über eine der peripheren Einrichtungen LTG einem zentralen Protocol Handler PRH der Ortsvermittlungsstelle $LE_T$ übergeben. Sie werden an der im Nachrichtenheader kodierten virtuellen Portnummer EQN des Teilnehmers TLN auf der Schnittstelle $V_B$ erkannt. Vermittels der administrativ in der Ortsvermittlungsstelle $LE_T$ zu pflegenden Tabelle T wird die im Nachrichtenheader kodierte virtuelle Portnummer EQN des Teilnehmers TLN auf der Schnittstelle $V_B$ auf die kodierte physikalische Portnummer EQN des Teilnehmers TLN auf der Schnittstelle $V_T$ umgesetzt. Die so umgesetzte Nachricht wird auf den Port des zentralen Protocol Handlers PRH ausgegeben, der die Weiterleitung der Paketdatennachricht auf einem der beiden Paketdatenkanäle der Schnittstelle $V_T$ in Richtung der Ortsvermittlungsstelle $LE_B$ gestattet. Dieser Paketdatenkanal ist für alle Nachrichten einer Paketdatenverbindung festgelegt. Zur Bereitstellung dieser Funktion wird ein sogenanntes frame switching in der Ortsvermittlungsstelle $LE_T$ ausgeführt. Die Steuerung der Schicht 1 von ISDN Teilnehmern TLN erfolgt im Teilnehmeranschlußkonzentrator DLU ohne direkte Steuerung durch die Ortsvermittlungsstelle $LE_T$.

Im Falle von Ausfall-/Wiederverfügbarkeitssituationen im Teilnehmeranschlußkonzentrator DLU oder auf der Schnittstelle $V_T$ generiert die Ortsvermittlungsstelle $V_T$ für alle betroffenen Teilnehmer TLN auf allen für diese Teilnehmermenge relevanten Schnittstellen $V_B$ portspezifische Ausfall-/Verfügbarkeitsmeldungen an die zugehörigen Ortsvermittlungsstelle $LE_B$. Hierbei ist der mehrfache Zugriff auf die Tabelle T zur Umsetzung der betroffenen Portnummer EQN in der Ortsvermittlungsstelle $LE_T$ erforderlich. Im Falle von Ausfall-/Wiederverfügbarkeitssituationen auf der Schnittstelle $V_B$ pflegt die Ortsvermittlungsstelle $LE_T$ für alle betroffenen Teilnehmer TLN portspezifische Zustandsinformationen, welche im Rahmen des Verbindungsaufbaus in der Ortsvermittlungsstelle $LE_T$ in der Art ausgewertet werden, daß der Verbindungsaufbau für einen nicht verfügbaren Teilnehmer TLN nicht durchgeführt wird. Hierbei ist der mehrfache Zugriff auf die Tabelle T zur Umsetzung der betroffenen Portnummer EQN in der Ortsvermittlungsstelle $LE_B$ erforderlich.

Will einer der Teilnehmer TLN Kunde eines anderen öffentlichen Netzbetreibers werden, so wird er per administrativem Eingriff in der Ortsvermittlungsstelle $LE_B$ blockiert und damit kurzzeitig im Teilnehmeranschlußkonzentrator DLU und permanent in der bisherigen Ortsvermittlungsstelle deaktiviert. In der neuen Ortsvermittlungsstelle $LE_B$ (Spezialfall neues $LE_B = LE_T$ enthalten) ist er bereits eingerichtet sowie einer Portnummer EQN zugeordnet. Diese wird in die Tabelle T der Ortsvermittlungsstelle $LE_T$ zusammen mit der zugehörigen herstellerspezifischen Schnittstelle eingebracht. Sodann wird der Teilnehmer TLN in der neuen Ortsvermittlungsstelle $LE_B$ (permanent) entblockiert. Zwar sind in vorliegendem Fall auch andere Vorgehensweisen denkbar; wesentlich dabei ist jedoch, daß der Teilnehmer TLN einem anderen Netzbetreiber durch administratives Umschreiben seiner Tabelleneinträge in der Tabelle T der Ortsvermittlungsstelle $LE_T$ flexibel zugeordnet werden kann.

Weitere Erweiterungsmöglichkeiten sind beispielsweise dadurch gegeben, daß feste Durchschaltungen von für bestimmte alternative Netzbetreiber reservierten Kanälen für Signalisierung und/oder D-Kanal-Paketdaten auf Kanäle einer Schnittstelle zwischen den Ortsvermittlungsstellen $LE_T$ und $LE_B$ vorgenommen werden.

Weiterhin können eigene Paketnetzzugänge in der Ortsvermittlungsstelle $LE_T$ an die Paketnetze der konkurrierenden Netzbetreiber vorgesehen werden, sowie Verkehrsmessungen / Vergebührungen von Calls und P-Calls als Basis der Abrechnung der öffentlichen Netzbetreiber untereinander.

**Patentansprüche**

1. Verfahren zur Anbindung von Teilnehmern an die Kommunikationssysteme verschiedener Netzbetreiber, mit
   einer Mehrzahl von Teilnehmern (TLN), die physikalisch einem Netzbetreiber (N1) und gegebenenfalls vermittlungstechnisch wenigstens einem weiteren Netzbetreiber (N2) über herstellerspezifische Schnittstellen ($V_T$, $V_B$) zugeordnet sind,
   **dadurch gekennzeichnet,**
   daß Signalisierungsnachrichten (SIG) und Sprachinformationen (SP) des vermittlungstechnisch dem weiteren Netzbetreiber (N2) zugeordneten Teilnehmers (TLN) transparent durch die wenigstens eine Ortsvermittlungsstelle ($LE_T$) des physikalisch zugeordneten Netzbetreibers (N1) durchgereicht werden an eine Ortsvermittlungsstelle ($LE_B$) des wenigstens einen weiteren Netzbetreibers (N2).

2. Verfahren nach Anspruch 1,
   **dadurch gekennzeichnet,**
   daß in der Ortsvermittlungsstelle ($LE_T$) des einen Netzbetreibers (N1) die den Signalisierungsnachrichten mitgegebene physikalische Adresse (EQN) daraufhin untersucht wird, ob der Teilnehmer (TLN) vermittlungstechnisch einem der weiteren Netzbetreiber (N2) zugeordnet ist.

3. Verfahren nach Anspruch 1 oder 2,
   **dadurch gekennzeichnet,**
   daß in einer Tabelle (T) der Ortsvermittlungsstelle ($LE_T$) des einen Netzbetreibers (N1) eine Umsetzung zwischen der physikalischen, auf der zwischen Teilnehmer und Ortsvermittlungsstelle ($LE_T$) des physikalisch zugeordneten Netzbetreibers (N1) gültigen Adresse und einer Adresse erfolgt, unter der die Signalisierungsnachrichten der Schnittstelle ($V_B$) übergeben werden, über die die Ortsvermittlungsstelle ($LE_B$) des wenigstens einen der weiteren Netzbetreiber (N2) erreichbar ist.

4. Verfahren nach einem der Ansprüche 1 bis 3,
   **dadurch gekennzeichnet,**
   daß von einem bzw. an einen Teilnehmer (TLN) gesendete Paketdaten (PD) über die periphere Einrichtung (LTG) geleitet werden, die den Paketdatenkanal terminiert, welcher die Paketdaten des Teilnehmers (TLN) auf der Schnittstelle zwischen der Ortsvermittlungsstelle ($LE_T$) und der Ortsvermittlungsstelle ($LE_B$) transportiert.

5. Verfahren nach einem der vorstehenden Ansprüche,

   **dadurch gekennzeichnet,**
   daß im Falle von Ausfall-/Wiederverfügbarkeitssituationen im Teilnehmeranschlußkonzentrator (DLU) oder auf der teilnehmerseitigen Schnittstelle ($V_T$) die Ortsvermittlungsstelle ($LE_T$) für alle betroffenen Teilnehmer (TLN) auf allen für diese Teilnehmermenge relevanten Schnittstellen portspezifische Ausfall-/Verfügbarkeitsmeldungen an die zugehörigen Ortsvermittlungsstellen ($LE_B$) generiert und daß im Falle von Ausfall-/Wiederverfügbarkeitssituationen auf der betreiberseitigen Schnittstelle ($V_B$) die Ortsvermittlungsstelle ($LE_T$) für alle betroffenen Teilnehmer (TLN) portspezifische Ausfall/Verfügbarkeitsindikatoren führt, welche im Rahmen des Verbindungsaufbaus vermittlungstechnisch ausgewertet werden.

6. Verfahren nach einem der vorstehenden Ansprüche,
   **dadurch gekennzeichnet,**
   daß die Mehrzahl von Teilnehmern (TLN) über eine Mehrzahl von Teilnehmeranschlußkonzentratoren (DLU) und/oder über eine Mehrzahl von herstellerspezifischen Schnittstellen die Ortsvermittlungsstelle ($LE_T$) des physikalisch zugeordneten Netzbetreibers (N1) erreicht und bzgl. Signalisierungsinformation, Sprachinformation und Paketdaten einer oder mehreren Schnittstellen ($V_B$) der Ortsvermittlungsstelle ($LE_B$) des weiteren Netzbetreibers (N2) zugeordnet ist.

7. Verfahren nach einem der vorstehenden Ansprüche,
   **dadurch gekennzeichnet,**
   daß an der Ortsvermittlungsstelle ($LE_T$) des physikalisch zugeordneten Netzbetreibers (N1) mehrere herstellerspezifische Schnittstellen ($V_B$) zu einer Mehrzahl von Ortsvermittlungsstellen ($LE_B$) unterschiedlicher, weiterer Netzbetreiber (N2) existieren.

8. Verfahren nach einem der vorstehenden Ansprüche,
   **dadurch gekennzeichnet,**
   daß Signalisierung und/oder Paketdaten der Mehrzahl der Teilnehmer (TLN) bereits im Teilnehmeranschlußkonzentrator (DLU) auf feste, nur für die vermittlungstechnisch dem weiteren Netzbetreiber (N2) zugeordneten Teilnehmer reservierte Kanäle geleitet werden, die via internem Nachrichtenverteilsystem der Ortsvermittlungsstelle ($LE_T$) oder via Sprachkanaldurchschaltung durch die Ortsvermittlungsstelle ($LE_T$) als Gesamtheit auf einen Signalisierungs und/oder Paketdatenkanal der betreiberseitigen Schnittstelle ($V_B$) geschaltet werden.

9. Verfahren nach einem der vorstehenden Ansprüche,
   **dadurch gekennzeichnet,**
   daß die Ortsvermittlungsstelle ($LE_T$) eine Verkehrsmessung im Sinne einer Zählung von Anzahl und/oder Dauer von Sprachkanaldurchschaltungen und/oder Anzahl und Länge übertragener Paketdaten und/oder Signalisierungsnachrichten zwischen der Mehrzahl der Teilnehmer (TLN) und dem weiteren Netzbetreiber (N2) als Basis zur Kostenabrechnung zwischen den Netzbetreibern (N1, N2) steuert.

10. Verfahren nach einem der vorstehenden Ansprüche,
**dadurch gekennzeichnet,**
daß die Tabelle (T) der Ortsvermittlungsstelle ($LE_T$) dahingehend durch Bedienereingriff administriert werden kann, daß ein Teilnehmer (TLN) wechselweise vermittlungstechnisch dem Netzbetreiber (N1) oder einem der weiteren Netzbetreiber (N2) zugeordnet werden kann, wobei in letzterem Falle die Schnittstelle ($V_B$), sowie die zugeordneten Signalisierungs und/oder Paketdatenkanäle und die auf der Schnittstelle ($V_B$) gültige Adresse frei zugeordnet werden können.

11. Verfahren nach einem der vorstehenden Ansprüche,
**dadurch gekennzeichnet,**
daß die Mehrzahl der Teilnehmer (TLN) auch Teilnehmer enthält, welche über genormte V5-Schnittstellen an die Ortsvermittlungsstelle ($LE_T$) angeschlossen sind und deren Signalisierungs- und Paketdateninformation in geeigneter Weise in der Ortsvermittlungsstelle ($LE_T$) umgesetzt wird zwischen den Schnittstellen ($V_T$) und ($V_B$).

LTG1

Lij

Lij

SN1

SNO

LTGn

Lij

Lij

MB1

MBO

PRH1

PRHO

Iij

SMOO,SM11

CP1

CPO

CMOO,CM11

IF

SP

# FIG 2